# EUROPEAN PATENT SPECIFICATION

(11) **EP 1 058 179 B1**
(45) Date of publication and mention of the grant of the patent: **03.03.2004**
(21) Application number: 99110926.5
(22) Date of filing: 04.06.1999
(51) Int. Cl.: G06F 1/16, G06K 9/22, G06F 15/02

(54) **Writing instrument with pen and computer functionalities**
Schreibgerät mit Schreiber und Rechner-Funktionalitäten
Instrument d'ecriture avec fonctions stylo et ordinateur

(43) Date of publication of application: 06.12.2000
(73) Proprietor: Shen, Ming-Tung, Taipei City (TW)
(72) Inventor: Shen, Ming-Tung, Taipei City (TW)
(74) Representative: Altenburg, Udo, Dipl.-Phys.

(56) References cited:
- EP-A- 0 362 970
- EP-A- 0 413 606
- EP-A- 0 439 340
- EP-A- 0 907 278
- WO-A-99/22338
- US-A- 4 070 649
- US-A- 4 141 073
- PATENT ABSTRACTS OF JAPAN vol. 1998, no. 13, 30 November 1998 (1998-11-30) & JP 10 210128 A (MITSUBISHI ELECTRIC CORP), 7 August 1998 (1998-08-07)
- PATENT ABSTRACTS OF JAPAN vol. 013, no. 563 (P-975), 14 December 1989 (1989-12-14) & JP 01 234977 A (HITACHI LTD), 20 September 1989 (1989-09-20)

## Description

The invention relates to a handheld computer, more particularly to a pen computer that can be used as a calculator, a telephone directory manager, and as an electronic dictionary.

Presently, address books and organizers are available to enable someone to write down contact information of clients and acquaintances. However, unless data were written in a neat and orderly manner, the search for desired contact information cannot be facilitated with the use of the conventional address books and organizers.

Most electronic dictionaries and personal digital assistants (PDA) currently incorporate numerous added functions, such as calculating functions, schedule organizing functions, and telephone directory managing functions, thereby increasing their utility. However, these electronic devices are still relatively bulky and heavy, thereby resulting in some inconvenience when carrying the same.

Therefore, the main object of the present invention is to provide a pen computer that can be used as a calculator, a telephone directory manager, and as an electronic dictionary, and that can overcome the aforesaid drawbacks commonly associated with conventional electronic dictionaries and personal digital assistants.

EP 0 362 970 shows a writing instrument for use in capturing information in drawing and writing.

According to the present invention, a pen computer comprises an elongated pen barrel, first and second encoding assemblies, and character recognition means. The pen barrel has a writing end provided with a rotatable ball bearing that serves as a ballpoint writing tip. The pen barrel is adapted to be held on one hand for forming characters on a writing surface via the ball bearing. The first encoding assembly, which is mounted on the writing end of the pen barrel, encodes movement of the ball bearing along an X-direction, and generates X-axis drive signals corresponding to encoded movement of the ball bearing along the X-direction. The second encoding assembly, which is mounted on the writing end of the pen barrel, encodes movement of the ball bearing along a Y-direction, and generates Y-axis drive signals corresponding to encoded movement of the ball bearing along the Y-direction. The character recognition means is disposed in the pen barrel and is connected electrically to the first and second encoding assemblies to receive the X-axis and Y-axis drive signals therefrom. The character recognition means identifies the characters formed on the writing surface via the ball bearing from the X-axis and Y-axis drive signals, and generates computer codes that are assigned to the characters identified thereby.

Preferably, the pen computer further comprises calculating means disposed in the pen barrel and associated with the character recognition means. In the event that the characters formed on the writing surface correspond to an arithmetic expression, the calculating means can be operated so as to process the computer codes that are assigned to the characters identified by the character recognition means in order to compute a result of the arithmetic expression.

More preferably, the pen computer further comprises a dictionary database disposed in the pen barrel for storing information about the words of a language, and dictionary searching means disposed in the pen barrel and associated with the character recognition means and the dictionary database. The dictionary searching means can be operated so as to process the computer codes that are assigned to the characters identified by the character recognition means in order to determine a word corresponding to the computer codes, and so as to retrieve the information corresponding to the word determined thereby from the dictionary database.

More preferably, the pen computer further comprises a directory storage unit disposed in the pen barrel for storing a telephone directory database therein, and telephone directory managing means disposed in the pen barrel and associated with the character recognition means and the directory storage unit. In the event that the characters formed on the writing surface correspond to a name and a contact number associated with the name, the telephone directory managing means can be operated in a directory building mode so as to process the computer codes that are assigned to the characters identified by the character recognition means in order to determine the name and the contact number corresponding to the computer codes, and so as to store the name and the contact number determined thereby in the directory storage unit.

Other features and advantages of the present invention will become apparent in the following detailed description of the preferred embodiments with reference to the accompanying drawings, of which:
Figure 1 is a fragmentary schematic view illustrating a writing tip of the first preferred embodiment of a pen computer according to the present invention;
Figure 2 is a schematic view illustrating an encoding assembly of the first preferred embodiment;
Figure 3 is a schematic view illustrating the position relationship among encoding assemblies and a ball bearing of the first preferred embodiment;
Figure 4 is a schematic view illustrating a rotary member and a sensing unit of the encoding assembly of the first preferred embodiment;
Figure 5 illustrates the relationship among drive signals from the encoding assemblies and direction of movement of the ball bearing according to the first preferred embodiment;
Figure 6 is a timing diagram illustrating the drive signals from the encoding assemblies of the first preferred embodiment when movement of the ball bearing occurs only in a +Y-direction;
Figure 7 is a timing diagram illustrating the drive signals from the encoding assemblies of the first preferred embodiment when movement of the ball bearing occurs in both a -Y-direction and a +X-direction;
Figure 8 is a timing diagram illustrating the drive signals from the encoding assemblies of the first preferred embodiment when movement of the ball bearing occurs only in a +X-direction;
Figure 9 is a fragmentary schematic sectional view of a pen barrel of the first preferred embodiment;
Figure 10 is a schematic circuit block diagram of a control unit of the first preferred embodiment;
Figure 10A is a functional block diagram of a memory device of the control unit of Figure 10;
Figure 10B is a functional block diagram of a processor of the control unit of Figure 10;
Figure 11 is a flowchart illustrating the operation of the first preferred embodiment;
Figure 12 is a flowchart illustrating the operation of the processor of the first preferred embodiment in a calculating mode;
Figure 13 is a schematic view illustrating a rotary member and a sensing unit of an encoding assembly of the second preferred embodiment of a pen computer according to the present invention; and
Figure 14 is a schematic view illustrating a rotary member and a sensing unit of an encoding assembly of the third preferred embodiment of a pen computer according to the present invention.

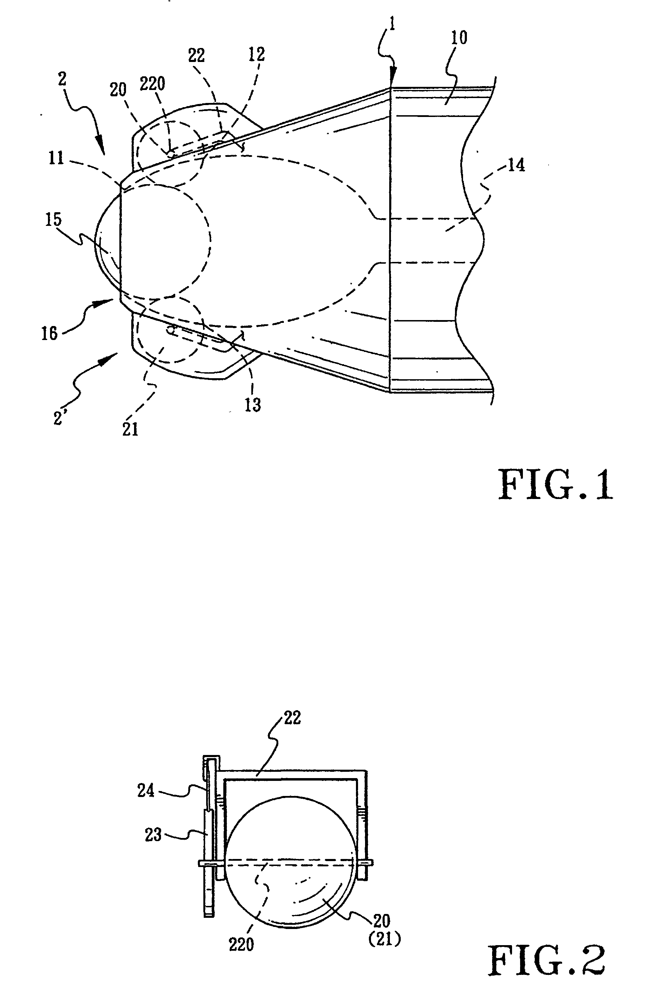

Referring to Figure 1, the first preferred embodiment of a pen computer 1 according to the present invention is shown to comprise an elongated pen barrel 10 having a writing end formed with an axial opening 11 and a pair of orthogonal radial chambers that are communicated with the opening 11 via cut-outs 12, 13. A rotatable ball bearing 15 extends outwardly of the pen barrel 10 at the axial opening 11 to serve as a ballpoint writing tip 16. An ink supplying unit 14, in the form of an ink core, is disposed in the pen barrel 10 and supplies ink to the ball bearing 15. In the preferred embodiment, the ball bearing 15 is retained rotatably on one end of the ink supplying unit 14. First and second encoding assemblies 2, 2' are mounted respectively in the radial chambers at the writing end of the pen barrel 10. The first encoding assembly 2 encodes movement of the ball bearing 15 along an X-direction, and generates X-drive signals corresponding to encoded movement of the ball bearing 15 along the X-direction. The second encoding assembly 2' encodes movement of the ball bearing 15 along a Y-direction, and generates Y-drive signals corresponding to encoded movement of the ball bearing 15 along the Y-direction.

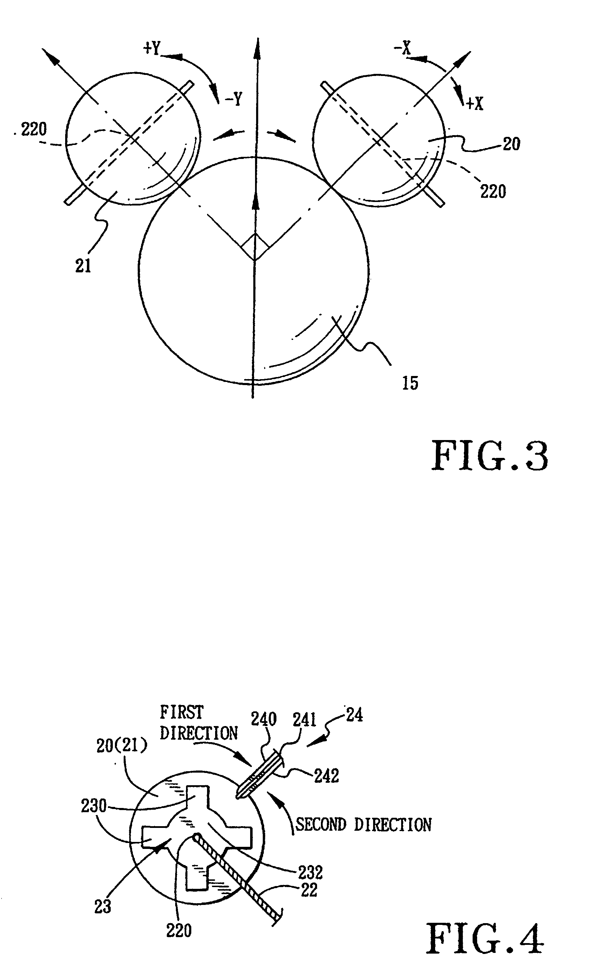

Referring to Figures 1 through 4, each of the first and second encoding assemblies 2, 2' includes a frame member 22 mounted securely in the respective radial chamber at the writing end of the pen barrel 10. A rotary shaft 220 is mounted rotatably on the frame member 22. A contact member 20, 21, in the form of a ball, is mounted securely on the rotary shaft 220 and extends into the pen barrel 10 via the cut-outs 12, 13 for contacting the ball bearing 15 such that rotation of the ball bearing 15 in a certain direction can drive rotation of the rotary shaft 220. The contact members 20, 21 contact the ball bearing 15 at orthogonal locations, as best shown in Figure 3. A rotary member 23 is mounted securely on the rotary shaft 220 for co-rotation therewith. A sensing unit 24 is mounted securely on the frame member 22 for generating the drive signals in response to detected movement of the rotary member 23.

As such, when the pen barrel 10 is held on one hand for forming characters on a writing surface via the ball bearing 15, the contact members 20, 21 rotate according to the direction of movement of the ball bearing 15 to drive rotation of the respective rotary shaft 220 and the associated rotary member 23. The X-axis and Y-axis drive signals are subsequently and respectively generated by the sensing units 24 of the first and second encoding assemblies 2, 2' in response to detected movement of the corresponding rotary member 23.

In the first preferred embodiment, the rotary member 23 is formed as a conductive member having a central mounting portion 232 mounted securely on the rotary shaft 220, and a plurality of equally spaced contact arms 230 that extend radially and outwardly from the central mounting portion 232. The rotary member 23 is connected electrically to a first voltage source, such as the ground terminal of a power supply unit. The sensing unit 24 includes an insulator substrate 241 mounted on the frame member 22 proximate to the rotary member 23, and front and rear conductor plates 240, 242 mounted respectively on front and rear sides of the insulator substrate 241. The front and rear conductor plates 240, 242 are connected electrically to a second voltage source, such as the positive (or Vcc) terminal of a power supply unit. When the contact members 20, 21 rotate in a corresponding first direction due to movement of the ball bearing 15, the contact arms 230 contact successively the front conductor plate 240 to result in +X-axis and +Y-axis drive signals. Accordingly, when the contact members 20, 21 rotate in a corresponding opposite second direction due to movement of the ball bearing 15, the contact arms 230 contact successively the rear conductor plate 242 to result in -X-axis and -Y-axis drive signals.

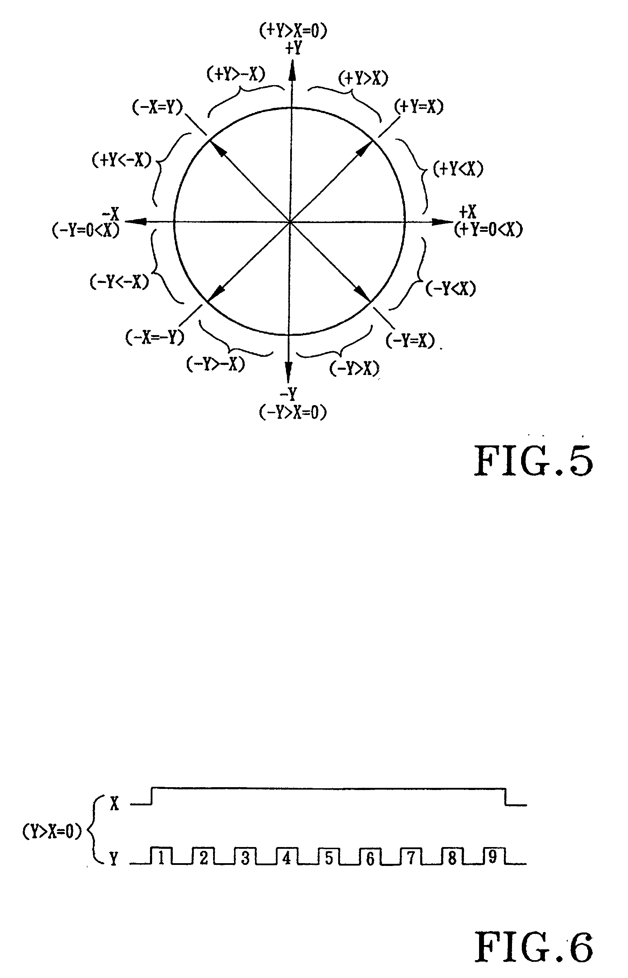

The relationship among drive signals from the first and second encoding assemblies 2, 2' and the direction of movement of the ball bearing 15 is shown in Figure 5. The following are three sample conditions to illustrate the operation of the encoding assemblies 2, 2' :

1. In the (+Y>X=0) state of Figure 5, movement of the ball bearing 15 only occurs in the +Y-direction. As such, the contact member 20 is stationary, while the contact member 21 rotates in the first direction. Figure 6 shows the X-axis and Y-axis drive signals generated by the first and second encoding assemblies 2, 2' under the (+Y>X=0) state. As shown, with further reference to Figure 6, because the contact member 20 is stationary, the associated rotary member 23 does not rotate, thereby maintaining the front and rear conductor plates 240, 242 at the high logic state due to connection of the latter with the positive (or Vcc) terminal of a power supply unit. On the other hand, because the contact member 21 rotates in the first direction, the associated rotary member 23 rotates such that the contact arms 230 contact successively the front conductor plate 240. Since the rotary member 23 is connected electrically to the ground terminal of a power supply unit, the logic state of the front conductor plate 240 changes from high to low at the instant one of the contact arms 230 makes contact therewith. Thus, due to rotation of the rotary member 23 with the contact member 21 in the first direction, the +Y-axis drive signal from the second encoding assembly 2' is generated in the form of a pulse train having equidistant pulses at this time.

In the example of Figure 6, the +Y-axis drive signal from the second encoding assembly 2' is formed of nine consecutive pulses. The number of pulses in the +Y-axis drive signal from the second encoding assembly 2' depends upon the speed of movement of the ball bearing 15 in the +Y-direction. The faster the movement of the ball bearing 15 in the +Y-direction, the pulses in the +Y-axis drive signal from the second encoding assembly 2' will be narrower, and the number of pulses in the +Y-axis drive signal will be greater.

The speed of rotation of the contact members 20, 21 depends upon the vectorial angle component of the movement of the ball bearing 15 that acts on the corresponding contact member 20, 21. For example, when the vectorial angle components acting on the contact members 20, 21 are equal, the contact members 20, 21 rotate at the same speed. When the vectorial angle component acting on the contact member 20 is greater than that acting on the contact member 21, the contact member 20 rotates at a faster speed as compared to the contact member 21. Accordingly, when the vectorial angle component acting on the contact member 20 is smaller than that acting on the contact member 21, the contact member 20 rotates at a slower speed as compared to the contact member 21.

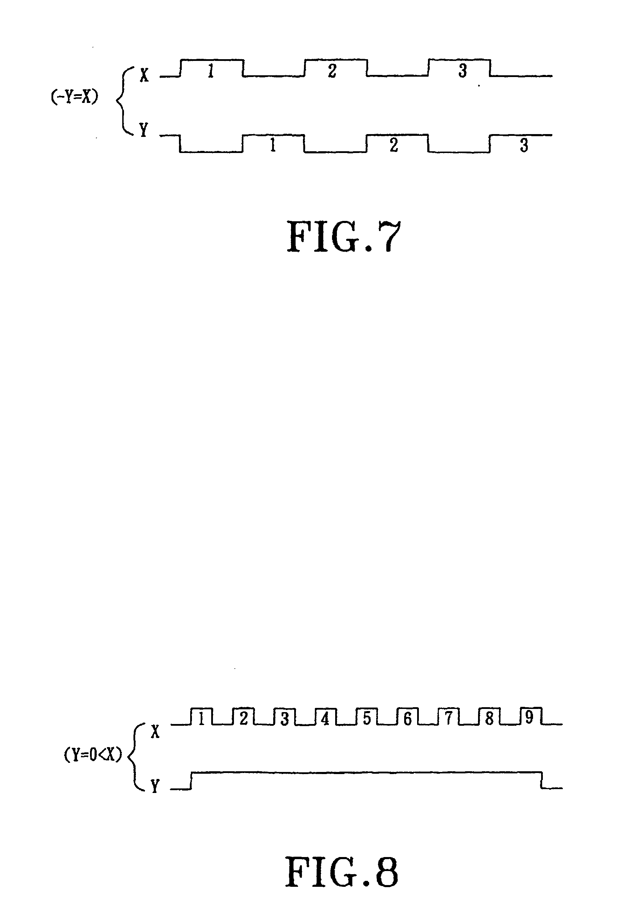

2. In the (-Y=+X) state of Figure 5, movement of the ball bearing 15 occurs in both the -Y-direction and the +X-direction. As such, the contact member 20 rotates in the first direction, whereas the contact member 21 rotates in the second direction. Figure 7 shows the X-axis and Y-axis drive signals generated by the first and second encoding assemblies 2, 2' under the (-Y=+X) state. As shown, both the +X-axis drive signal and the -Y-axis drive signal from the first and second encoding assemblies 2, 2' are in the form of pulse trains. However, because the vectorial angle components of the movement of the ball bearing 15 that act on the contact members 20, 21 are equal, assuming that the ball bearing 15 moves at the same speed as in the example of Figure 6, the contact members 20, 21 rotate at a slower speed as compared to the example of Figure 6, thereby resulting in wider pulses for the +X-axis and the -Y-axis drive signals.

3. In the (+Y=0<X) state of Figure 5, movement of the ball bearing 15 only occurs in the +X-direction. As such, the contact member 21 is stationary, while the contact member 20 rotates in the first direction. Figure 8 shows the X-axis and Y-axis drive signals generated by the first and second encoding assemblies 2, 2' under the (+Y=0<X) state. As shown, the Y-axis drive signal from the second encoding assembly 2' is maintained at the high logic state, whereas the +X-axis drive signal from the first encoding assembly 2 is in the form of a pulse train.

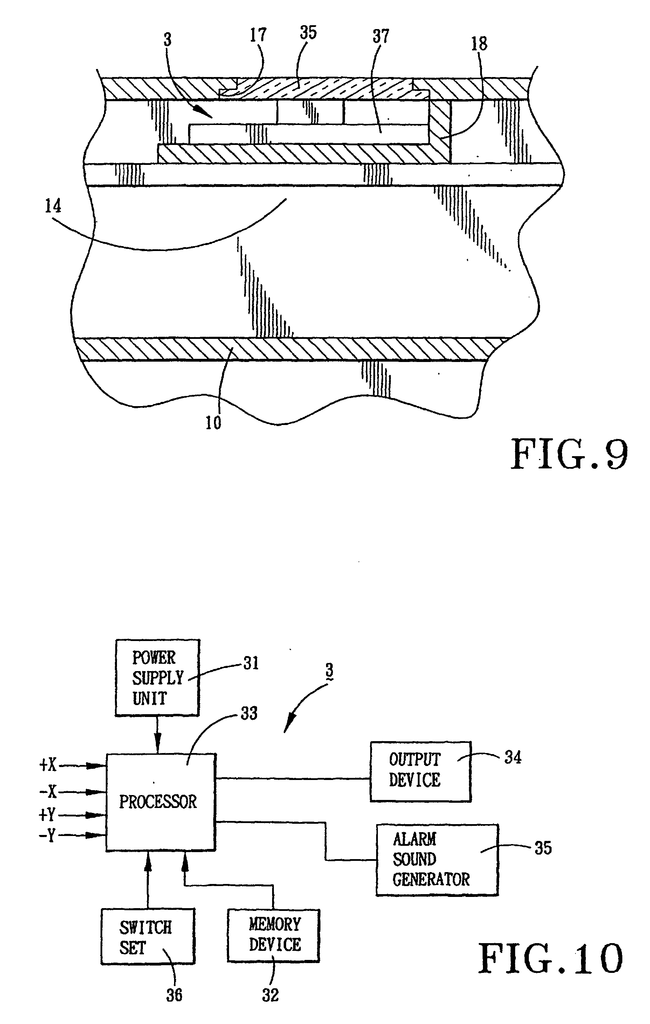

Referring to Figure 9, the pen barrel 10 is further formed with a mounting hole 17. A positioning frame portion 18 projects inwardly and integrally from the pen barrel 10 adjacent to the mounting hole 17. A circuit board 37 is mounted on the positioning frame 18, and has a control unit 3 provided thereon.

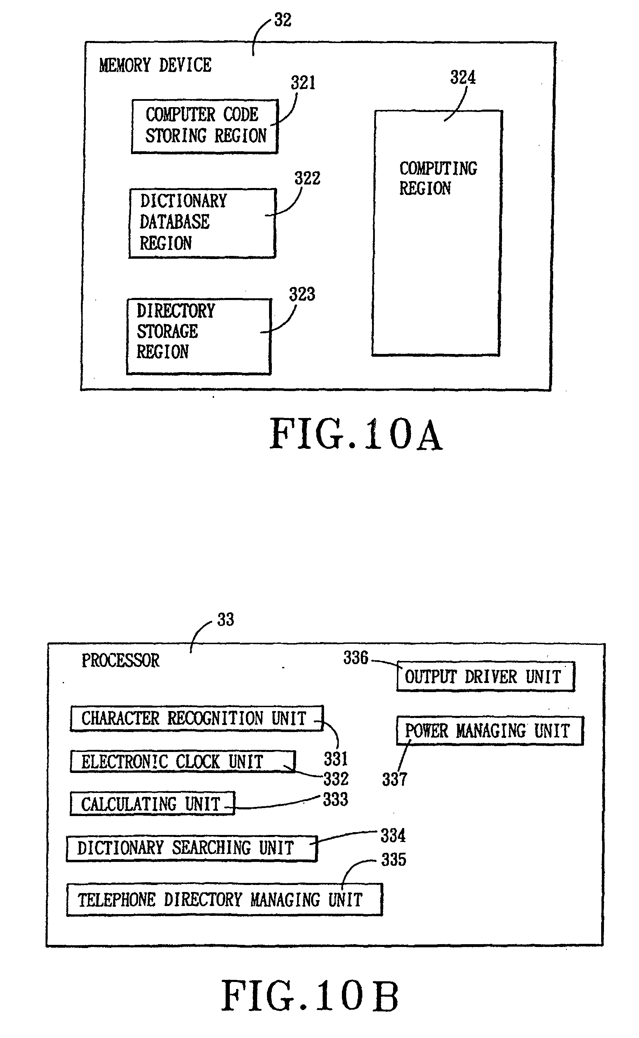

Referring to Figure 10, the control unit 3 includes a power supply unit 31, a memory device 32, a processor 33, an output device 34, an alarm sound generator 35, and a switch set 36.

The power supply unit 31 can be in the form of series-connected battery cells (not shown), and provides the electrical energy required for operating the control unit 3.

Referring to Figure 10A, the memory device 32 is configured to include at least a computer code storing region 321, a dictionary database region 322, a directory storage region 323, and a computing region 324. The computer code storing region 321 is used to store character patterns and associated standard computer codes that are assigned to characters to be formed on a writing surface via the ball bearing 15. One example of a standard computer code is ASCII, which is suitable for encoding alphanumeric characters. However, in view of the fact that some languages, such as Chinese and Japanese, do not use ASCII for the encoding of their characters, more than one type of character patterns and standard computer codes may be stored in the region 321 to enable operation of the pen computer 1 under different language formats. The dictionary database region 322 is used to store information about the words of a language. The information can be the meaning of a word, or a translation of the word in another language, e.g. English to Chinese. Known dictionary databases of the aforementioned type in electronic form are applicable for storage in the dictionary database region 322. The directory storage region 323 is used to store a telephone directory database therein. The format of the directory storage region 323 can be similar to those found in most conventional handheld electronic devices, such as electronic dictionaries and personal digital assistants. The computing region 324 is used for temporary storage of data when making calculations, when identifying an input character, when forming an entry for the telephone directory database, etc.

In the preferred embodiment, the memory device 32 is implemented using two different kinds of memory units. The first memory unit is a FLASH random access memory having at least the computer code storing region 321, the dictionary database region 322, and the directory storage region 323. The second memory unit is a static random access memory having at least the computing region 324.

Referring again to Figure 10, the output device 34 is preferably in the form of a liquid crystal display (LCD) unit that is mounted in the mounting hole 17 of the pen barrel 10. The alarm sound generator 35 is in the form of a speaker, and the switch set 36 is used to control the operating mode of the processor 33, as will be described in greater detail in the succeeding paragraphs.

As shown in Figures 10 and 10B, the processor 33, such as a microprocessor, is connected to the power supply unit 31, the memory device 32, the output device 34, the alarm sound generator 35, and the switch set 36. The processor 33 is further connected to the first and second encoding assemblies 2, 2' (see Figure 1) so as to receive the X-axis and Y-axis drive signals therefrom. With reference to Figure 10B, the processor 33 is configured to include a character recognition unit 331, an electronic clock unit 332, a calculating unit 333, a dictionary searching unit 334, a telephone directory managing unit 335, and an output driver unit 336.

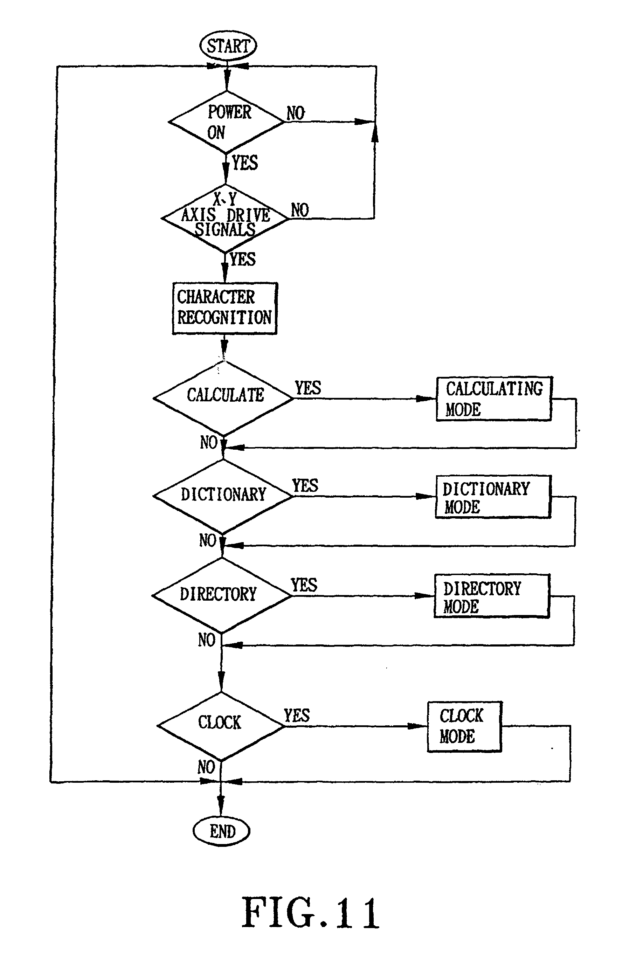

Figure 11 is a flowchart illustrating the operation of the first preferred embodiment. With additional reference to Figures 1, 10, 10A and 10B, when the power supply 31 is active, the switch set 36 can be operated in a predetermined manner to select the operating mode of the processor 33 and the operating language of the pen computer 1. Once the ball bearing 15 moves to form characters on a writing surface, the first and second encoding assemblies 2, 2' generate the X-axis and Y-axis drive signals corresponding to the detected movement of the ball bearing 15. At this time, the character recognition unit 331 retrieves the appropriate character patterns and standard computer codes from the computer code storing region 321 of the memory device 32, and stores the same in the computing region 324 so that computations and comparisons can be made in order to commence identification of the characters formed on the writing surface, and generation of the computer codes that are assigned to the characters identified thereby. The generated computer codes for the identified characters are stored in the computing region 324 at this time. The character recognition unit 331 is further associated operably with the output driver unit 336, which enables the output device 34 to indicate the characters identified by the character recognition unit 331 thereon.

As to how the character recognition unit 331 identifies the characters that are formed on the writing surface via the ball bearing 15, this can be accomplished using known character recognition techniques, which vary according to the language of the characters to be identified.

When using the pen computer 1 to compute the result of an arithmetic expression, the switch set 36 is initially operated so as to enable operation of the processor 33 in a calculating mode. When the characters that constitute the arithmetic expression are written down on the writing surface via the ball bearing 15, the character recognition unit 331 proceeds to store the computer codes for the identified characters in the computing region 324. The calculating unit 333 then processes the computer codes stored by the character recognition unit 331 in order to compute the result of the arithmetic expression. This action can be triggered upon detection of the computer code for the "=" sign. The calculating unit 333 is further associated operably with the output driver unit 336, which enables the output device 34 to indicate the result of the arithmetic expression thereon.

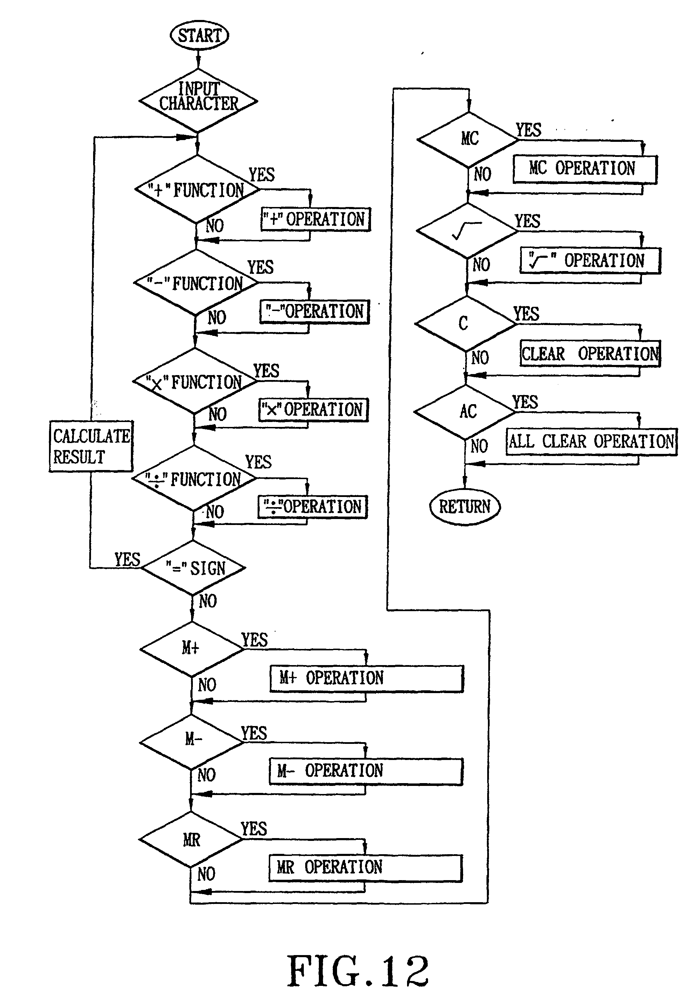

Figure 12 is a flowchart illustrating the operation of the processor 33 in the calculating mode. Since the functions associated with the processor 33 when operating in this mode are similar to those found in conventional calculators, a detailed explanation of the flowchart of Figure 12 will be dispensed with herein for the sake of brevity.

When using the pen computer 1 to search for information regarding a particular word, the switch set 36 is initially operated so as to enable operation of the processor 33 in a dictionary searching mode. When the characters that constitute the particular word are written down on the writing surface via the ball bearing 15, the character recognition unit 331 proceeds to store the computer codes for the identified characters in the computing region 324. The dictionary searching unit 334 then processes the computer codes stored by the character recognition unit 331 in order to determine the word corresponding to the computer codes, and retrieves the information corresponding to the word that was determined thereby from the dictionary database region 322 of the memory device 32. This action can be triggered upon detection of the computer code for the "?" character, which is appended to the characters of the subject word. The dictionary searching unit 334 is further associated operably with the output driver unit 336, which enables the output device 34 to indicate the information retrieved by the dictionary searching unit 334 from the dictionary database region 332 thereon.

As is known in the art, the procedure for determining a subject word from computer codes varies according to the selected operating language of the pen computer 1. Since the search routine associated with the dictionary searching unit 334 is commonly found in electronic dictionaries, a detailed description of the same will be dispensed with herein for the sake of brevity.

The switch set 36 can be further operated so as to enable operation of the processor 33 in a directory managing mode. In the directory managing mode, a name and an associated contact number can be added into the directory storage region 323, and the contact number that is associated with an input name can be retrieved from the directory storage region 323. When adding an entry into the directory storage region 323, the characters that constitute the name and the contact number associated with the name are written down on the writing surface via the ball bearing 15. The character recognition unit 331 proceeds to store the computer codes for the identified characters in the computing region 324 as described beforehand. The telephone directory managing unit 335 then processes the computer codes stored by the character recognition unit 331 in order to determine the name and the contact number corresponding to the computer codes. The telephone directory managing unit 335 is further associated operably with the output driver unit 336, which enables the output device 34 to indicate the name and the contact number determined by the telephone directory managing unit 335 thereon for verification. Upon operation of the switch set 36 to verify accuracy of the information indicated on the output device 34, the telephone directory managing unit 335 stores the name and the contact number as a new entry in the directory storage region 323.

When searching a contact number in the directory storage region 323, the characters that constitute an input name are written down on the writing surface via the ball bearing 15. The character recognition unit 331 proceeds to store the computer codes for the identified characters in the computing region 324, and the telephone directory managing unit 335 then processes the computer codes stored by the character recognition unit 331 in order to determine the input name corresponding to the computer codes. By appending a symbol, such as the "?" character, to the input name, the telephone directory managing unit 335 is enabled upon detection of the symbol to search the directory storage region 323 for the contact number that is associated with the input name. With the assistance of the output driver unit 336, the output device 34 is enabled so as to indicate the input name and the associated contact number retrieved by the telephone directory managing unit 335 thereon.

Since known directory building and directory searching techniques found in handheld electronic devices are applicable to the telephone directory managing unit 335, a more detailed description of the operation of the latter will be dispensed with herein for the sake of brevity.

The switch set 36 can be further operated so as to permit operation of the processor 33 in a clock mode. In the clock mode, the electronic clock unit 332 is enabled to generate a time output. The electronic clock unit 332 is associated operably with the output driver unit 336 so as to enable the output device 34 to indicate the time output of the electronic clock unit 332 thereon. Like conventional electronic clocks, operation of the switch set 36 in a predetermined manner while the processor 33 is in the clock mode enables setting of the time output of the electronic clock unit 332 and setting of an alarm time. In addition, upon determination by the electronic clock unit 332 that the time output has reached the preset alarm time, the electronic clock unit 332 activates the alarm sound generator 35 in a known manner to generate an alarm sound output.

Referring again to Figures 10 and 10B, in the preferred embodiment, the processor 33 is further configured to include a power managing unit 337 that is associated operably with the memory device 32 such that, when power to the pen computer 1 is turned off or when residual power of the power supply unit 31 is insufficient to ensure normal operation of the control unit 3, the power managing unit 337 will transfer data, such as a name and the associated contact number, in the static RAM into the FLASH RAM to avoid data loss.

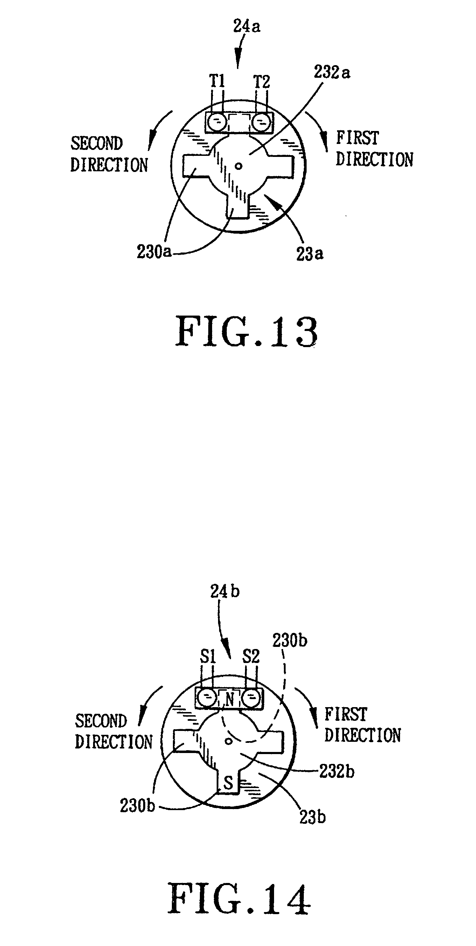

The configuration of the first and second encoding assemblies should not be limited to that described beforehand. Other forms of encoding assemblies can be employed in the pen computer of this invention, as shown in Figures 13 and 14.

Figure 13 illustrates a rotary member 23a and a sensing unit 24a of an encoding assembly of the second preferred embodiment of a pen computer according to the present invention. The rotary member 23a is made of plastic, and has a central mounting portion 232a mounted securely on the rotary shaft (not shown), and a plurality of equally spaced shielding arms 230a that extend radially and outwardly from the central mounting portion 232a. The sensing unit 24a includes first and second photo detectors (T1), (T2), such as photo transistors, mounted on the frame member (not shown) in a side-by-side relationship proximate to the rotary member 23a. When the rotary shaft rotates in the first direction, each of the shielding arms 230a shields the first photo detector (T1) first before shielding the second photo detector (T2) . Thus, the drive signal from the first photo detector (T1) changes to a high logic state before that from the second photo detector (T2). When the rotary shaft rotates in the opposite second direction, each of the shielding arms 230a shields the second photo detector (T2) first before shielding the first photo detector (T1). Thus, the drive signal from the second photo detector (T2) changes to a high logic state before that from the first photo detector (T1). When the rotary shaft does not rotate, the first and second photo detectors (T1), (T2) are not shielded by the shielding arms 230a, and generate a corresponding drive signal that is maintained at the low logic state.

Figure 14 illustrates a rotary member 23b and a sensing unit 24b of an encoding assembly of the third preferred embodiment of a pen computer according to the present invention. The rotary member 23b has a central mounting portion 232b mounted securely on the rotary shaft (not shown), and a plurality of equally spaced arms 230b that extend radially and outwardly from the central mounting portion 232b. Each of the arms 230b has a permanent magnet thereon. Preferably, each of the arms 230b is formed from a permanent magnet material. The sensing unit 24b includes first and second hall effect sensors (S1), (S2) mounted on the frame member (not shown) in a side-by-side relationship proximate to the rotary member 23b. When the rotary shaft rotates in the first direction, each of the arms 230b moves closely adjacent to the first hall effect sensor (S1) first before moving adjacent to the second hall effect sensor (S2) . Thus, the drive signal from the first hall effect sensor (S1) changes to a high logic state before that from the second hall effect sensor (S2). When the rotary shaft rotates in the opposite second direction, each of the arms 230b moves closely adjacent to the second hall effect sensor (S2) first before moving adjacent to the first hall effect sensor (S1). Thus, the drive signal from the second hall effect sensor (S2) changes to a high logic state before that from the first hall effect sensor (S1). When the rotary shaft does not rotate, the first and second hall effect sensors (S1), (S2) are not affected by the magnetic properties of the arms 230b, and generate a corresponding drive signal that is maintained at the low logic state.

## Claims

1. A pen computer (1) **characterized by**:
an elongated pen barrel (10) having a writing end provided with a rotatable ball bearing (15) that serves as a ballpoint writing tip (16), said pen barrel (10) being adapted to be held on one hand for forming characters on a writing surface via said ball bearing (15);
a first encoding assembly (2), mounted on said writing end of said pen barrel (10), for encoding movement of said ball bearing (15) along an X-direction and for generating X-axis drive signals corresponding to encoded movement of said ball bearing (15) along the X-direction;
a second encoding assembly (2'), mounted on said writing end of said pen barrel (10), for encoding movement of said ball bearing (15) along a Y-direction and for generating Y-axis drive signals corresponding to encoded movement of said ball bearing (15) along the Y-direction; and
character recognition means (331) disposed in said pen barrel (10) and connected electrically to said first and second encoding assemblies (2, 2') to receive the X-axis and Y-axis drive signals therefrom, said character recognition means (331) identifying the characters formed on the writing surface via said ball bearing (15) from the X-axis and Y-axis drive signals and generating computer codes that are assigned to the characters identified thereby.

2. The pen computer (1) as claimed in Claim 1, further **characterized by** an output device (34) mounted on said pen barrel (10), and an output driver unit (336) disposed in said pen barrel (10) and connected to said output device (34), said character recognition means (331) being associated operably with said output driver unit (336) so as to enable said output device (34) to indicate the characters identified by said character recognition means (331).

3. The pen computer (1) as claimed in Claim 2, **characterized in that** said output device (34) is a display unit for visual indication of the characters identified by said character recognition means (331).

4. The pen computer (1) as claimed in Claim 3, further **characterized by** electronic clock means (332), disposed in said pen barrel (10), for generating a time output, said electronic clock means (332) being associated operably with said output driver unit (336) so as to enable said output device (34) to indicate the time output of said electronic clock means (332).

5. The pen computer (1) as claimed in Claim 4, further **characterized by** an alarm sound generator (35) mounted in said pen barrel (10) and connected to and controlled by said electronic clock means (332) so as to generate an alarm sound output upon determination by said electronic clock means (332) that the time output thereof has reached a preset alarm time.

6. The pen computer (1) as claimed in Claim 1, **characterized in that** the characters formed on the writing surface correspond to an arithmetic expression, said pen computer (1) further comprising calculating means (333) disposed in said pen barrel (10) and associated with said character recognition means (331), said calculating means (333) being operable so as to process the computer codes that are assigned to the characters identified by said character recognition means (331) in order to compute a result of the arithmetic expression.

7. The pen computer (1) as claimed in Claim 6, further **characterized by** an output device (34) mounted on said pen barrel (10), and an output driver unit (336) disposed in said pen barrel (10) and connected to said output device (34), said calculating means (333) being further associated operably with said output driver unit (336) so as to enable said output device (34) to indicate the result of the arithmetic expression.

8. The pen computer (1) as claimed in Claim 7, **characterized in that** said output device (34) is a display unit for visual indication of the result of the arithmetic expression.

9. The pen computer (1) as claimed in Claim 1, further **characterized by**:
a dictionary database (322), disposed in said pen barrel (10), for storing information about the words of a language; and
dictionary searching means (334) disposed in said pen barrel (10) and associated with said character recognition means (331) and said dictionary database (322), said dictionary searching means (334) being operable so as to process the computer codes that are assigned to the characters identified by said character recognition means (331) in order to determine a word corresponding to the computer codes, and so as to retrieve the information corresponding to the word determined thereby from said dictionary database (322).

10. The pen computer (1) as claimed in Claim 9, further **characterized by** an output device (34) mounted on said pen barrel (10), and an output driver unit (336) disposed in said pen barrel (10) and connected to said output device (34), said dictionary searching means (334) being further associated operably with said output driver unit (336) so as to enable said output device (34) to indicate the information retrieved by said dictionary searching means (334) from said dictionary database (322).

11. The pen computer (1) as claimed in Claim 10, **characterized in that** said output device (34) is a display unit.

12. The pen computer (1) as claimed in Claim 1, **characterized in that** the characters formed on the writing surface correspond to a name and a contact number associated with the name, said pen computer (1) further comprising:
a directory storage unit (323), disposed in said pen barrel (10), for storing a telephone directory database therein; and
telephone directory managing means (335) disposed in said pen barrel (10) and associated with said character recognition means (331) and said directory storage unit (323), said telephone directory managing means (335) being operable in a directory building mode so as to process the computer codes that are assigned to the characters identified by said character recognition means (331) in order to determine the name and the contact number corresponding to the computer codes, and so as to store the name and the contact number determined thereby in said directory storage unit (323).

13. The pen computer (1) as claimed in Claim 12, further **characterized in that** said telephone directory managing means (335) is further operable in a directory searching mode, where said telephone directory managing means (335) processes the computer codes that are assigned to the characters identified by said character recognition means (331) in order to determine the name corresponding to the computer codes, and searches said directory storage unit (323) for the contact number associated with the name.

14. The pen computer (1) as claimed in Claim 13, further **characterized by** an output device (34) mounted on said pen barrel (10), and an output driver unit (336) disposed in said pen barrel (10) and connected to said output device (34), said telephone directory managing means (335) being further associated operably with said output driver unit (336) so as to enable said output device (34) to indicate the contact number retrieved by said telephone directory managing means (335) from said directory storage unit (323).

15. The pen computer (1) as claimed in Claim 14, **characterized in that** said output device (34) is a display unit.

16. The pen computer (1) as claimed in any one of the preceding claims, further **characterized by** ink supplying means (14) , disposed in said pen barrel (10), for supplying ink to said ball bearing (15).

17. The pen computer (1) as claimed in any one of the preceding claims, **characterized in that** each of said first and second encoding assemblies (2, 2') comprises:
a frame member (22) mounted securely on said writing end of said pen barrel (10);
a rotary shaft (220) mounted rotatably on said frame member (22);
a contact member (20, 21) mounted securely on said rotary shaft (220) and in contact with said ball bearing (15) such that rotation of said ball bearing (15) can drive corresponding rotation of said rotary shaft (220) ;
a rotary member (23, 23a, 23b) mounted securely on said rotary shaft (220) for co-rotation therewith; and
a sensing unit (24, 24a, 24b) mounted securely on said frame member (22) for generating the drive signals in response to detected movement of said rotary member (23, 23a, 23b).

18. The pen computer (1) as claimed in Claim 17, **characterized in that**:
said rotary member (23) is formed as a conductive member having a central mounting portion (232) mounted securely on said rotary shaft (220), and a plurality of equally spaced contact arms (230) that extend radially and outwardly from said central mounting portion (232), said rotary member (23) being adapted to be connected electrically to a voltage source; and
said sensing unit (24) includes an insulator substrate (241) and front and rear conductor plates (240, 242) mounted respectively on front and rear sides of said insulator substrate (241), said insulator substrate (241) being mounted on said frame member (22) proximate to said rotary member (23) such that rotation of said rotary shaft (220) in a first direction enables said contact arms (230) to contact successively said front conductor plate (240) and such that rotation of said rotary shaft (220) in an opposite second direction enables said contact arms (230) to contact successively said rear conductor plate (242).

19. The pen computer (1) as claimed in Claim 17, **characterized in that**:
said rotary member (23a) has a central mounting portion (232a) mounted securely on said rotary shaft (220), and a plurality of equally spaced shielding arms (230a) that extend radially and outwardly from said central mounting portion (232a); and
said sensing unit (24a) includes first and second photo detectors (T1, T2) mounted on said frame member (22) in a side-by-side relationship proximate to said rotary member (23a) such that rotation of said rotary shaft (220) in a first direction enables each of said shielding arms (230a) to shield said first photo detector (T1) first before shielding said second photo detector (T2), and such that rotation of said rotary shaft (220) in an opposite second direction enables each of said shielding arms (230a) to shield said second photo detector (T2) first before shielding said first photo detector (T1).

20. The pen computer (1) as claimed in Claim 19, **characterized in that** said first and second photo detectors (T1, T2) are photo transistors.

21. The pen computer (1) as claimed in Claim 17, **characterized in that**:
said rotary member (23b) has a central mounting portion (232b) mounted securely on said rotary shaft (220), and a plurality of equally spaced arms (230b) that extend radially and outwardly from said central mounting portion (232b), each of said arms (230b) having a permanent magnet thereon; and
said sensing unit (24b) includes first and second hall effect sensors (S1, S2) mounted on said frame member (22) in a side-by-side relationship proximate to said rotary member (23b) such that rotation of said rotary shaft (220) in a first direction enables each of said arms (230b) to move closely adjacent to said first hall effect sensor (S1) first before moving adjacent to said second hall effect sensor (S2), and such that rotation of said rotary shaft (220) in an opposite second direction enables each of said arms (230b) to move closely adjacent to said second hall effect sensor (S2) first before moving adjacent to said first hall effect sensor (S1).

## Patentansprüche

1. Ein Stiftcomputer (1), **gekennzeichnet durch**:
einen verlängerten Stiftschaft (10), welcher ein Schreibende aufweist, welches mit einem drehbaren Kugellager (15) versehen ist, welches als Kugelschreiberspitze (16) dient, wobei der Stiftschaft (10) angepasst ist, um in einer Hand gehalten zu werden zum Bilden von Buchstaben auf einer Schreiboberfläche **durch** das Kugellager (15);
eine erste Codier-Anordnung (2), die auf dem Schreibende des Stiftschafts (10) montiert ist zum Codieren einer Bewegung des Kugellagers (15) entlang einer X-Richtung und zum Erzeugen von X-Achsen-Antriebssignalen entsprechend der codierten Bewegung des Kugellagers (15) entlang der X-Richtung;
eine zweite Codier-Anordnung (2'), die auf dem Schreibende des Stiftschafts (10) montiert ist zum Codieren einer Bewegung des Kugellagers (15) entlang einer Y-Richtung und zum Erzeugen von Y-Achsen-Antriebssignalen entsprechend der codierten Bewegung des Kugellagers (15) entlang der Y-Richtung; und
eine Buchstaben-Erkennungseinrichtung (331), die in dem Stiftschaft (10) angeordnet ist und elektrisch mit der ersten und zweiten Codier-Anordnung (2, 2') verbunden ist, um von ihnen die X-Achsen- und Y-Achsen-Antriebssignale zu empfangen, wobei die Buchstaben-Erkennungseinrichtung (331) die Buchstaben identifiziert, die auf der Schreiboberfläche **durch** das Kugellager (15) gebildet sind, aus den X-Achsen- und Y-Achsen-Antriebssignalen, und Computer-Codes erzeugt, welche **dadurch** den identifizierten Buchstaben zugewiesen werden.

2. Der Stiftcomputer (1), wie in Anspruch 1 beansprucht, weiterhin **gekennzeichnet durch** eine Ausgabevorrichtung (34), die auf dem Stiftschaft (10) montiert ist, und einer Ausgabe-Antriebseinheit (336), die in dem Stiftschaft (10) angeordnet ist und mit der Ausgabevorrichtung (34) verbunden ist, wobei die Buchstaben-Erkennungseinrichtung (331) operativ mit der Ausgabe-Antriebseinheit (336) assoziiert ist, um es der Ausgabevorrichtung (34) zu ermöglichen, die Buchstaben, die identifiziert wurden, **durch** die Buchstaben-Erkennungseinrichtung (331) anzuzeigen.

3. Der Stiftcomputer (1), wie in Anspruch 2 beansprucht, **dadurch gekennzeichnet, dass** die Ausgabevorrichtung (34) eine Anzeigeeinheit zur visuellen Anzeige der Buchstaben ist, die durch die Buchstaben-Erkennungseinrichtung (331) identifiziert wurden.

4. Der Stiftcomputer (1), wie in Anspruch 3 beansprucht, weiterhin **gekennzeichnet durch** eine elektronische Uhreinrichtung (332), die in dem Stiftschaft (10) angeordnet ist zum Erzeugen einer Zeitausgabe, wobei die elektronische Uhreinrichtung (332) operativ mit der Ausgabe-Antriebseinheit (336) assoziiert ist, um so die Ausgabevorrichtung (34) in die Lage zu versetzen, die Zeitausgabe der elektronischen Uhreinrichtung (332) anzuzeigen.

5. Der Stiftcomputer (1), wie in Anspruch 4 beansprucht, weiterhin **gekennzeichnet durch** einen Alarmgeräusch-Generator (35), der in dem Stiftschaft (10) montiert ist, und verbunden ist mit und gesteuert wird **durch** die elektronische Uhreinrichtung (332), um so eine Alarm-Geräusch-Ausgabe auf eine Bestimmung **durch** die elektronische Uhreinrichtung (332) hin zu erzeugen, dass die Zeitausgabe davon eine voreingestellte Alarmzeit erreicht hat.

6. Der Stiftcomputer (1), wie in Anspruch 1 beansprucht, **dadurch gekennzeichnet, dass** die Buchstaben, die auf der Schreiboberfläche gebildet sind, einem arithmetischen Ausdruck entsprechen, wobei der Stiftcomputer (1) weiterhin eine Recheneinrichtung (333) umfasst, die in dem Stiftschaft (10) angeordnet ist und mit der Buchstaben-Erkennungseinrichtung (331) assoziiert ist, wobei die Recheneinrichtung (333) betreibbar ist, um die Computercodes zu verarbeiten, die den Buchstaben zugewiesen sind, die durch die Buchstaben-Erkennungseinrichtung (331) identifiziert wurden, um ein Ergebnis des arithmetischen Ausdrucks zu berechnen.

7. Der Stiftcomputer (1), wie in Anspruch 6 beansprucht, weiterhin **gekennzeichnet durch** eine Ausgabevorrichtung (34), die auf dem Stiftschaft (10) montiert ist, und einer Ausgabe-Antriebseinheit (336), die in dem Stiftschaft (10) angeordnet ist und mit der Ausgabevorrichtung (34) verbunden ist, wobei die Recheneinrichtung (333) weiterhin operativ mit der Ausgabe-Antriebseinheit (336) assoziiert ist, um so die Ausgabevorrichtung (34) in die Lage zu versetzen, das Ergebnis des arithmetischen Ausdrucks anzuzeigen.

8. Der Stiftcomputer (1), wie in Anspruch 7 beansprucht, **dadurch gekennzeichnet, dass** die Ausgabevorrichtung (34) eine Anzeigeeinheit zur visuellen Anzeige des Ergebnisses des arithmetischen Ausdrucks ist.

9. Der Stiftcomputer (1), wie in Anspruch 1 beansprucht, weiterhin **gekennzeichnet durch**:
eine Wörterbuch-Datenbank (322), die in dem Stiftschaft (10) angeordnet ist zum Speichern von Informationen über die Wörter einer Sprache; und
eine Wörterbuch-Sucheinrichtung (334), die in dem Stiftschaft (10) angeordnet ist und mit der Buchstaben-Erkennungseinrichtung (331) und der Wörterbuch-Datenbank (322) assoziiert ist, wobei die Wörterbuch-Sucheinrichtung (334) betreibbar ist, um die Computercodes zu verarbeiten, die den Buchstaben zugewiesen sind, die **durch** die Buchstaben-Erkennungseinrichtung (331) identifiziert wurden, um ein Wort zu bestimmen entsprechend den Computercodes, und um die Informationen entsprechend dem Wort abzufragen, welches **dadurch** aus der Wörterbuch-Datenbank (322) bestimmt wurde.

10. Der Stiftcomputer (1), wie in Anspruch 9 beansprucht, weiterhin **gekennzeichnet durch** eine Ausgabevorrichtung (34), die auf dem Stiftschaft (10) montiert ist, und eine Ausgabe-Antriebseinheit (336), die in dem Stiftschaft (10) angeordnet ist und mit der Ausgabevorrichtung (34) verbunden ist, wobei die Wörterbuch-Sucheinrichtung (334) weiterhin operativ mit der Ausgabe-Antriebseinheit (336) assoziiert ist, um so die Ausgabevorrichtung (34) in die Lage zu versetzen, die Informationen anzuzeigen, die **durch** die Wörterbuch-Sucheinrichtung (334) aus der Wörterbuch-Datenbank (322) abgefragt wurden.

11. Der Stiftcomputer (1), wie in Anspruch 10 beansprucht, **dadurch gekennzeichnet, dass** die Ausgabevorrichtung (34) eine Anzeigeeinheit ist.

12. Der Stiftcomputer (1), wie in Anspruch 1 beansprucht, **dadurch gekennzeichnet, dass** die Buchstaben, die auf der Schreiboberfläche gebildet sind, einem Namen und einer Kontaktnummer entsprechen, die mit dem Namen assoziiert ist, wobei der Stiftcomputer (1) weiterhin umfasst:
eine Wörterbuch-Speichereinheit (323), die in dem Stiftschaft (10) angeordnet ist zum Speichern einer Telefonbuch-Datenbank darin; und
eine Telefonbuch-Verwaltungseinrichtung (335), die in dem Stiftschaft (10) angeordnet ist und mit der Buchstaben-Erkennungseinrichtung (331) und der Wörterbuch-Speichereinheit (323) assoziiert ist, wobei die Telefonbuch-Verwaltungseinrichtung (335) betreibbar ist in einem Wörterbuch-Aufbau-Modus, um die Computercodes zu verarbeiten, die den Buchstaben zugewiesen sind, die durch die Buchstaben-Erkennungseinrichtung (331) identifiziert wurden, um den Namen und die Kontaktnummer entsprechend den Computercodes zu bestimmen, und um den Namen und die Kontaktnummer zu speichern, die dadurch bestimmt wurden, in der Wörterbuch-Speichereinheit (323).

13. Der Stiftcomputer (1), wie in Anspruch 12 beansprucht, weiterhin **dadurch gekennzeichnet, dass** die Telefonbuch-Verwaltungseinrichtung (335) weiterhin in einem Wörterbuch-Suchmodus betreibbar ist, in welchem die Telefonbuch-Verwaltungseinrichtung (335) die Computercodes verarbeitet, die den Buchstaben zugewiesen sind, die durch die Buchstaben-Erkennungseinrichtung (331) identifiziert wurden, um den Namen entsprechend den Computercodes zu identifizieren, und die Wörterbuch-Speichereinheit (323) nach der Kontaktnummer, die mit den Namen assoziiert sind, durchsucht.

14. Der Stiftcomputer (1), wie in Anspruch 13 beansprucht, weiterhin **gekennzeichnet durch** eine Ausgabevorrichtung (34), die auf dem Stiftschaft (10) montiert ist, und eine Ausgabe-Antriebseinheit (336), die in dem Stiftschaft (10) angeordnet ist und mit der Ausgabevorrichtung (34) verbunden ist, wobei die Telefonbuch-Verwaltungseinrichtung (335) weiterhin operativ mit der Ausgabe-Antriebseinheit (336) assoziiert ist, um die Ausgabevorrichtung (34) in die Lage zu versetzen, die Kontaktnummer anzuzeigen, die **durch** die Telefonbuch-Verwaltungseinrichtung (335) aus der Telefonbuch-Speichereinheit (323) abgefragt wurde.

15. Der Stiftcomputer (1), wie in Anspruch 14 beansprucht, **dadurch gekennzeichnet, dass** die Ausgabevorrichtung (34) eine Anzeigeeinheit ist.

16. Der Stiftcomputer (1), wie in irgendeinem der vorhergehenden Ansprüche beansprucht, weiterhin **gekennzeichnet durch** eine Tintenzuführeinrichtung (14), die in dem Stiftschaft (10) angeordnet ist, zum Zuführen von Tinte zu dem Kugellager (15).

17. Der Stiftcomputer (1), wie in irgendeinem der vorhergehenden Ansprüche beansprucht, **dadurch gekennzeichnet, dass** jede der ersten und zweiten Codier-Anordnungen (2, 2') umfasst:
ein Rahmenelement (22), das fest auf einem Schreibende des Stiftschafts (10) montiert ist;
einen Drehschaft (220), der drehbar auf dem Rahmenelement (22) montiert ist;
ein Kontaktelement (20, 21), das fest auf dem Drehschaft (220) montiert ist und mit dem Kugellager (15) in Kontakt ist, so dass eine Drehung des Kugellagers (15) eine entsprechende Drehung des Drehschafts (220) antreiben kann;
ein Drehelement (23, 23a, 23b), das fest auf dem Drehschaft (220) montiert ist zur gemeinsamen Drehung damit; und
eine Abtasteinheit (24, 24a, 24b), die fest auf dem Rahmenelement (22) montiert ist zum Erzeugen von Antriebssignalen in Reaktion auf eine detektierte Bewegung des Drehelements (23, 23a, 23b).

18. Der Stiftcomputer (1), wie in Anspruch 17 beansprucht, **dadurch gekennzeichnet, dass**:
das Drehelement (23) als ein leitendes Element gebildet ist, welches einen zentralen Montageabschnitt (232) aufweist, der fest auf dem Drehschaft (220) montiert ist und eine Vielzahl von gleich beabstandeten Kontaktarmen (230), die sich radial und nach außen von dem zentralen Montageabschnitt (232) erstrecken, wobei das Drehelement (23) angepasst ist, um elektrisch an eine Spannungsquelle angeschlossen zu werden; und
die Abtasteinheit (24) ein Isoliersubstrat (241) enthält und vordere und hintere Leiterplatten (240, 242), die jeweilig auf vorderen und hinteren Seiten des Isoliersubstrats (241) montiert sind, wobei das Isoliersubstrat (241) auf dem Rahmenelement (22) nahe des Drehelements (23) montiert ist, so dass eine Drehung des Drehschafts (220) in einer ersten Richtung die Kontaktarme (230) in die Lage versetzt, aufeinanderfolgend die vordere Leiterplatte (240) zu kontaktieren, und dass eine Drehung des Drehschafts (220) in einer entgegengesetzten zweiten Richtung die Kontaktarme (230) in die Lage versetzt, aufeinanderfolgend die hintere Leiterplatte (242) zu kontaktieren.

19. Der Stiftcomputer (1), wie in Anspruch 17 beansprucht, **dadurch gekennzeichnet, dass**:
das Drehelement (23a) einen zentralen Montageabschnitt (232a) aufweist, der fest auf dem Drehschaft (220) montiert ist und eine Vielzahl von gleich beabstandeten Abschirmarmen (230a), die sich radial und nach außen von dem zentralen Montageabschnitt (232a) erstrecken; und
die Abtasteinheit (24a) erste und zweite Photodetektoren (T1, T2) enthält, die auf dem Rahmenelement (22) in einer Seite-an-Seite-Beziehung nahe des Drehelements (23a) montiert sind, so dass eine Drehung des Drehschafts (220) in einer ersten Richtung, die Abschirmarme (230a) in die Lage versetzt, den ersten Photodetektor (T1) zuerst abzuschirmen bevor der zweite Photodetektor (T2) abgeschirmt wird, und dass eine Drehung des Drehschafts (230) in einer entgegengesetzten zweiten Richtung jeden der Abschirmarme (230a) in die Lage versetzt, den zweiten Photodetektor (T2) zuerst abzuschirmen bevor der erste Photodetektor (T1) abgeschirmt wird.

20. Der Stiftcomputer (1), wie in Anspruch 19 beansprucht, **dadurch gekennzeichnet, dass** die ersten und zweiten Photodetektoren (T1, T2) Phototransistoren sind.

21. Der Stiftcomputer (1), wie in Anspruch 17 beansprucht, **dadurch gekennzeichnet, dass**:
das Drehelement (23b) einen zentralen Montageabschnitt (232b) aufweist, der fest auf dem Drehschaft (220) montiert ist und eine Vielzahl von gleich beabstandeten Armen (230b), die sich radial und nach außen von dem zentralen Montageabschnitt (232b) erstrecken, wobei jeder Arm (230b) einen Dauermagneten darauf aufweist; und
die Abtasteinheit (24b) erste und zweite Halleffektsensoren (S1, S2) enthält, die auf dem Rahmenelement (22) in einer Seite-an-Seite-Beziehung nahe des Drehelements (23b) montiert sind, so dass eine Drehung des Drehschafts (220) in einer ersten Richtung die Arme (230b) in die Lage versetzt, sich zuerst dicht angrenzend an den ersten Halleffektsensor (S1) zu bewegen bevor sie sich in die Nähe des zweiten Halleffektsensors (S2) bewegen, und dass solch eine Drehung des Drehschafts (220) in einer entgegengesetzten zweiten Richtung die Arme (230b) in die Lage versetzt, sich zuerst dicht angrenzend an den zweiten Halleffektsensor (S2) zu bewegen, bevor sie sich in die Nähe des ersten Halleffektsensors (S1) bewegen.

## Revendications

1. Ordinateur (1) équipé d'un stylo, **caractérisé par**
un tube allongé de stylo (10) comportant une extrémité d'écriture pourvu d'un appui rotatif en forme de bille (15) qui sert de pointe d'écriture à bille (16), ledit tube (10) du stylo étant adapté pour être tenu d'une main pour former des caractères sur une surface d'inscription par l'intermédiaire dudit appui rotatif en forme de bille (15);
un premier ensemble de codage (2) monté sur ladite extrémité d'écriture dudit tube (10) du stylo pour coder le déplacement dudit appui en forme de bille (15) dans une direction X et produire des signaux de commande suivant l'axe X, correspondant à un mouvement codé dudit appui en forme de bille (15) dans la direction X;
un second ensemble de codage (2') monté sur ladite extrémité d'écriture dudit tube (10) du stylo pour coder le mouvement dudit appui en forme de bille (15) dans une direction Y et pour produire des signaux de commande suivant l'axe Y correspondant à un mouvement codé dudit appui en forme de bille (15) dans la direction Y; et
des moyens (331) de reconnaissance de caractères disposés dans ledit tube (10) du stylo et connectés électriquement auxdits premier et second ensembles de codage (2, 2') pour recevoir, de ces derniers, des signaux de commande d'axe X et d'axe Y, lesdits moyens (331) de reconnaissance de caractères identifiant les caractères formés sur la surface d'écriture par l'intermédiaire dudit appui en forme de bille (15) à partir des signaux de commande d'axe X et d'axe Y et produire des codes d'ordinateur qui sont affectés aux caractères ainsi identifiés.

2. Ordinateur (2) équipé d'un stylo selon la revendication 1, **caractérisé en outre par** un dispositif de sortie (34) monté sur ledit tube (10) du stylo et formant étage de commande de sortie (336) disposé dans ledit tube (10) du stylo et connecté audit dispositif de sortie (34), lesdits moyens (131) de reconnaissance de caractères étant associés de façon opérationnelle à ladite unité formant étage de commande de sortie (336) de manière à permettre audit dispositif de sortie (34) d'indiquer les caractères identifiés par lesdits moyens (331) de reconnaissance de caractères.

3. Ordinateur (1) équipé d'un stylo selon la revendication 2, **caractérisé en ce que** ledit dispositif de sortie (34) est une unité d'affichage pour fournir l'indication visuelle des caractères identifiés par lesdits moyens (331) de reconnaissance de caractères.

4. Ordinateur (1) équipé d'un stylo selon la revendication 3, **caractérisé en outre par** des moyens formant horloge électronique (332), disposés dans ledit tube (10) du stylo, pour produire un signal de sortie de temps, lesdits moyens formant horloge électronique (332) étant associés de façon opérationnelle à ladite unité formant étage de commande de sortie (336) de manière à permettre audit dispositif de sortie (34) d'indiquer le signal de sortie de temps desdits moyens formant horloge électronique (332).

5. Ordinateur (1) équipé d'un stylo selon la revendication 4, **caractérisé en outre par** un générateur de sons d'alarme (35) monté dans ledit tube (10) du stylo et connecté à et commandé par lesdits moyens formant horloge électronique (332) de manière à produire un son d'alarme délivré lors de la détermination, par lesdits moyens formant horloge électronique (332), du fait que le signal de sortie de temps de ces moyens a atteint un instant d'alarme préréglé.

6. Ordinateur (1) équipé d'un stylo selon la revendication 1, **caractérisé en ce que** les caractères formés sur la surface d'inscription correspondent à une expression arithmétique, ledit ordinateur (1) équipé d'un stylo comprenant en outre des moyens de calcul (333) disposés dans ledit tube (10) du stylo et associés auxdits moyens (331) de reconnaissance de caractères, lesdits moyens de calcul (339) pouvant agir de manière à traiter les codes d'ordinateur qui sont affectés aux caractères identifiés par lesdits moyens (331) de reconnaissance de caractères de manière à calculer un résultat de l'expression arithmétique.

7. Ordinateur (1) équipé d'un stylo selon la revendication 6, **caractérisé en outre par** un dispositif de sortie (34) monté sur ledit tube (10) du stylo, et une unité formant étage de commande de sortie (336) disposé dans ledit tube (10) du stylo et connecté audit dispositif de sortie (34), lesdits moyens de calcul (333) étant en outre associés de façon opérationnelle à ladite unité formant étage de commande de sortie (336) de manière à permettre au dispositif de sortie (34) d'indiquer le résultat de l'expression arithmétique.

8. Ordinateur (1) équipé d'un stylo selon la revendication 7, **caractérisé en ce que** ledit dispositif de sortie (34) est une unité d'affichage pour l'indication visuelle du résultat de l'expression arithmétique.

9. Ordinateur (1) équipé d'un stylo selon la revendication 1, **caractérisé en outre par**:
une base de données de dictionnaire (322) disposée dans ledit tube (10) du stylo pour mémoriser l'information contenant les mots d'un langage; et
des moyens (334) de recherche dans le dictionnaire disposés dans ledit tube (10) du stylo et associé auxdits moyens (331) de reconnaissance de caractères et à ladite base de données de dictionnaire (322), lesdits moyens (334) de recherche dans le dictionnaire pouvant agir de manière à traiter les codes d'ordinateur qui sont affectés aux caractères identifiés par lesdits moyens (331) de reconnaissance de caractères de manière à déterminer un mot correspondant aux codes d'ordinateur de manière à récupérer l'information correspondant au mot déterminé ainsi à partir de la base de données de dictionnaire (322).

10. Ordinateur (1) équipé d'un stylo selon la revendication 9, **caractérisé en outre par** un dispositif de sortie (34) monté sur ledit tube (10) du stylo et une unité formant étage de commande de sortie (336) disposé dans ledit tube (10) du stylo et connecté audit dispositif de sortie (34), lesdits moyens (334) de recherche dans le dictionnaire étant en outre associés de façon opérationnelle à ladite unité formant étage de commande de sortie (336) de manière à permettre audit dispositif de sortie (34) d'indiquer l'information récupérée par lesdits moyens (334) de recherche dans le dictionnaire à partir de ladite base de données de dictionnaire (322).

11. Ordinateur (1) équipé d'un stylo selon la revendication 10, **caractérisé en ce que** ledit dispositif de sortie (34) est une unité d'affichage.

12. Ordinateur (1) équipé d'un stylo selon la revendication 1, **caractérisé en ce que** les caractères formés sur la surface d'inscription correspondent à un nom et à un numéro de contact associé au nom, ledit ordinateur (1) équipé d'un stylo comprenant en outre:
une unité (323) de mémorisation de répertoire disposée dans ledit tube (10) du style, pour y mémoriser une base de données de répertoire téléphonique; et
des moyens (335) de gestion du répertoire téléphonique disposés dans ledit tube (10) du stylo et associés auxdits moyens (331) de reconnaissance de caractères et à ladite unité (323) de mémorisation de répertoire, lesdits moyens (335) de gestion de répertoire téléphonique pouvant agir dans un mode d'établissement du répertoire de manière à traiter les codes d'ordinateur qui sont affectés aux caractères identifiés par lesdits moyens (331) de reconnaissance de caractères afin de déterminer le nom et le numéro de contact correspondant aux codes d'ordinateur et de manière à mémoriser le nom et le numéro de contact déterminés ainsi dans ladite unité (323) de mémorisation de répertoire.

13. Ordinateur (1) équipé d'un stylo selon la revendication 12, **caractérisé en outre en ce que** lesdits moyens (335) de gestion du répertoire téléphonique peuvent en outre agir dans un mode de recherche dans le répertoire, dans lequel les moyens (335) de gestion du répertoire téléphonique traitent les codes d'ordinateur qui sont affectés aux caractères identifiés par lesdits moyens (331) de reconnaissance de caractères de manière à déterminer le nom correspondant aux codes d'ordinateur et effectuent une recherche du numéro de contact associé au nom dans ladite unité (323) de mémorisation du répertoire.

14. Ordinateur (1) équipé d'un stylo selon la revendication 13, **caractérisé en outre par** un dispositif de sortie (34) monté sur ledit tube (10) du stylo et une unité formant étage de commande (336) disposée dans ledit tube (10) de stylo et connecté audit dispositif de sortie (34), lesdits moyens (335) de gestion du répertoire téléphonique étant en outre associés de façon opérationnelle à ladite unité formant étage de commande de sortie (336) de manière à permettre audit dispositif de sortie (34) d'indiquer le numéro de contact récupéré par lesdits moyens (335) de gestion du répertoire téléphonique à partir de ladite unité (323) de mémorisation de répertoire.

15. Ordinateur (1) équipé d'un stylo selon la revendication 14, **caractérisé en ce que** ledit dispositif de sortie (34) est un affichage.

16. Ordinateur (1) équipé d'un stylo selon l'une quelconque des revendications précédentes, **caractérisé en outre par** des moyens d'alimentation en encre (14), disposés dans le tube (10) du stylo pour envoyer de l'encre audit appui rotatif en forme de bille (15).

17. Ordinateur (1) équipé d'un stylo selon l'une quelconque des revendications précédentes, **caractérisé en ce que** chacun desdits premier et second ensembles de codage (2, 2') comprend:
un élément formant cadre (22) monté de façon fixe sur ladite extrémité d'écriture dudit tube (10) du stylo;
une tige rotative (220) montée de manière à pouvoir tourner sur ledit élément formant cadre (22);
un élément de contact (20, 21) monté de façon fixe sur ledit arbre rotatif (220) et en contact avec ledit appui en forme de bille (15) de telle sorte que la rotation dudit appui en forme de bille (15) peut entraîner une rotation correspondante dudit arbre rotatif (220);
un élément rotatif (23, 23a, 23b) monté de façon fixe sur ladite tige rotative (220) pour tourner conjointement avec cette dernière; et
une unité de détection (24, 24a, 24b) montée de façon fixe sur ledit élément formant cadre (22) pour produire les signaux de commande en réponse au mouvement détecté dudit élément rotatif (23, 23a, 23b).

18. Ordinateur (1) équipé d'un stylo selon la revendication 17, **caractérisé en ce que**:
ledit élément rotatif (23) est agencé sous la forme d'un élément conducteur comportant une partie de montage centrale (232) montée de façon fixe sur ledit arbre rotatif (220), et une pluralité de bras de contact également espacés (230), qui s'étendent radialement et vers l'extérieur à partir de ladite partie de montage centrale (232), ledit élément rotatif (23) étant adapté pour être connecté électriquement à une source de tension; et
ladite unité de détection (34) inclut un substrat isolant (241) et des plaques formant conducteurs avant et arrière (240, 242) montées respectivement sur des côtés avant et arrière dudit substrat isolant (241), ledit substrat isolant (241) étant monté sur ledit élément formant cadre (22) à proximité dudit élément rotatif (23) de telle sorte qu'une rotation dudit arbre rotatif (220) dans une première direction permet auxdits bras de contact (230) de venir successivement en contact avec ladite plaque formant conducteur avant (240) de telle sorte qu'une rotation dudit arbre rotatif de ladite tige rotative (220) dans une seconde direction opposée permet auxdits bras de contact (230) de venir successivement en contact avec ladite plaque formant conducteur arrière (242).

19. Ordinateur (1) équipé d'un stylo selon la revendication 17, **caractérisé en ce que**:
ledit élément rotatif (23a) possède une partie de montage centrale (232a) montée de façon fixe sur ladite tige rotative (220), et une pluralité de bras de protection également espacés (230a), qui s'étendent radialement et vers l'extérieur à partir de ladite partie de montage centrale (232a); et
ladite unité de détection (24a) inclut les premier et second photodétecteurs (T1, T2) montés sur ledit élément formant cadre (32) dans une relation côte-à-côte à proximité dudit élément rotatif (23a) de sorte qu'une rotation de ladite tige rotative (220) dans une première direction permet à chacun desdits bras de protection (230a) de protéger ledit premier photodétecteur (T1) en premier avant de protéger ledit second photodétecteur (T2), et de telle sorte qu'une rotation dudit arbre relatif (220) dans une seconde direction opposée permet à chacun desdits bras de protection (230a) de protéger tout d'abord ledit second photodétecteur (T2) avant de protéger ledit premier photodétecteur (T1).

20. Ordinateur (1) équipé d'un stylo selon la revendication 19, **caractérisé en ce que** lesdits premier et second photodétecteurs (T1, T2) sont des phototransistors.

21. Ordinateur (1) équipé d'un stylo selon la revendication 17, **caractérisé en ce que** ledit élément rotatif (23b) possède une partie de montage central (232b) montée de façon fixe sur ladite tige rotative (220), et une pluralité de bras également espacés (230b) qui s'étendent radialement et vers l'extérieur à partir de ladite partie de montage centrale (232b), chacun desdits bras (230b) portant un aimant permanent; et
ladite unité de détection (24b) inclut des premier et second capteurs à effet Hall (S1, S2) montés sur ledit élément formant cadre (22) dans une relation côte-à-côte à proximité dudit élément rotatif (23b) de telle sorte qu'une rotation de ladite tige rotative (220) dans une première direction permet à chacun desdits bras (230b) de se déplacer tout d'abord à proximité directe dudit premier capteur à effet Hall (S1) avant de se déplacer au voisinage dudit second capteur à effet Hall (S2), et de telle sorte qu'une rotation de ladite tige rotative (220) dans une seconde direction opposée permet à chacun desdits bras (230b) de se déplacer tout d'abord à proximité directe dudit second capteur à effet Hall (S2) avant de se déplacer au voisinage dudit premier capteur à effet Hall (S1).
